# EUROPEAN PATENT SPECIFICATION

(11) **EP 3 320 728 B1**
(45) Date of publication and mention of the grant of the patent: **29.05.2019**
(21) Application number: 16736634.3
(22) Date of filing: 06.07.2016
(51) Int. Cl.: H04W 60/04, H04W 68/08, H04W 68/02

(54) **CORE NETWORK ASSISTED RAN PAGING**
KERNNETZUNTERSTÜTZTER RAN-FUNKRUF
RADIOMESSAGERIE RAN ASSISTÉE PAR UN RÉSEAU CENTRAL

(30) Priority: 06.07.2015 US 201562188972 P
(43) Date of publication of application: 16.05.2018
(73) Proprietor: Telefonaktiebolaget LM Ericsson (publ), 164 83 Stockholm (SE)
(72) Inventor: SCHLIWA-BERTLING, Paul, SE-590 71 Ljungsbro (SE); MÜLLER, Walter, SE-194 62 Upplands Väsby (SE); WALLDEEN, Thomas, SE-587 31 Linköping (SE); AXÉN, Rasmus, SE-583 36 Linköping (SE); KARLSSON, Patrik, SE-191 33 Sollentuna (SE); DREVÖ, Markus, SE-582 19 Linköping (SE)
(74) Representative: Haseltine Lake LLP
(86) International application number: PCT/IB2016/054054
(87) International publication number: WO 2017/006265

(56) References cited:
- EP-A1- 1 079 656
- WHA SOOK JEON ET AL: "Performance of Improved Probabilistic Location Update Scheme for Cellular Mobile Networks", IEEE TRANSACTIONS ON VEHICULAR TECHNOLOGY, IEEE SERVICE CENTER, PISCATAWAY, NJ, US, vol. 49, no. 6, 1 November 2000 (2000-11-01), XP011064162, ISSN: 0018-9545

## Description

### CROSS-REFERENCE TO RELATED APPLICATIONS

This application claims the benefit of U.S. Provisional Application No. 62/188,972, filed July 6, 2015, the disclosure of which is incorporated herein by reference.

### TECHNICAL FIELD

The disclosed subject matter relates generally to telecommunications, and more particularly to connectivity management in a communication network.

### BACKGROUND

Further evolution of wireless communication networks aims to accommodate continuously increasing amounts of connections and traffic. Consequently, the networks experience continuously increasing growth in the amount of signaling related to connection setup and management, which poses a significant burden on the network signaling and processing capacity and is therefore undesirable.

A major source of the signaling load experienced by network nodes is the signaling overhead associated with state transitions of user equipment (UE) (also referred to herein as "wireless communication devices") when toggling between the Radio Resource Control (RRC) Connected and RRC Idle state. Keeping the UE in RRC Connected state towards the Core Network (CN), as applied for the UTRAN Registration Area Paging Channel (URA_PCH) state in WCDMA/UTRAN and as described in 3GPP TS 25.331, is one approach to reduce that signaling overhead. A UE in the URA_PCH state is considered by the CN as being in the RRC Connected state. However, the Radio Access Network (RAN) has no physical radio link established with the UE and thus cannot instantaneously send data to that UE nor does the RAN know the current location of the UE with cell level resolution (though the RAN may know the UE's location on a cell cluster basis). Thus, from the RAN perspective the UE appears, from a radio resource point of view, to be in a state similar to the RRC Idle state.

In accordance with this particular approach for reducing signaling, any new data addressed to a given UE arriving at the CN is simply forwarded to the RAN node that is the terminating point of the CN-RAN connection for that UE. As pointed out above, while the CN considers the UE to be in the RRC Connected state, the RAN may have at the same time
no radio link established (physical layer) with that UE, i.e. the UE might be in a state where it performs autonomous mobility over a certain Mobility Area (MA) that is well known to the UE and the RAN node. (In a 3GPP defined RAN an MA may in general correspond to one or more cells in the RAN. For example, an MA may be a UTRAN Registration Area (URA), which includes a plurality of cells.)

In order to be able to forward the data received from the CN to the UE in that particular state, the RAN establishes a radio link on a physical layer with the UE, which puts the UE into an RRC Connected state not only from the CN point of view but also from the RAN point of view. In addition, reconfiguration of the physical layer may be necessary to avoid radio interface problems, bearers may need to be modified/established etc.

The basic challenge for the RAN in that scenario is to find the UE's location in order to establish the radio link. As noted above, an MA may include several cells, each having a physical radio access node. Therefore, a paging process may be implemented over the MA to determine the UE's location.

However, the UE may have moved to another MA since last being in the RRC Connected state. For example, the cell the UE is located in may belong to overlapping MAs and the UE may have registered itself with a different one of the overlapping MAs. Alternatively, the UE may have physically moved to a different MA. In either case the paging process will fail, i.e. the UE will not respond to paging and thus the RAN will not be able to establish a radio link with that UE. One method used to prevent failed paging is to mandate that the UE perform signaling to the RAN whenever it moves between different MAs to ensure the RAN is kept aware of which MA to page. Mandating location updates, however, adds an additional signaling load between the RAN and the UE and uses network resources inefficiently.
A technical paper by Wha Sook Jeon and Dong Geun Jeong ("Performance of Improved Probabilistic Location Update Scheme for Cellular Mobile Networks", IEEE Transactions on Vehicular Technology, Vol 49, No. 6) describes a probabilistic location update scheme for cellular mobile networks. A control parameter is used to achieve best performance when the unit location update cost and the unit paging cost are given.
EP 1079656 discloses a technique for the optimization of routing area updates during inter-system handover between GSM/GPRS and UMTS in standby state for packet data wireless networks.

### SUMMARY

The embodiments relate to connectivity management in a communication network. A wireless communication device that does not maintain a physical radio link connection to the RAN will still signal to the RAN when it moves to another MA to maintain reachability for receiving any downlink data addressed to the device from another node in the network. As discussed above, however, such signaling increases signaling overhead, which can become excessive. Aspects of the disclosure are defined in the independent claims appended hereto.

In a first example, a method for reducing signaling load in a radio access network includes determining, by a wireless communication device, that the wireless communication device has moved from a first mobility area to a second mobility area of the radio access network. Then, instead of performing a location update in response to determining that the wireless communication device has moved from the first mobility area to the second mobility area, the wireless communication device refrains from performing a location update with the radio access network.

In a further aspect of the first example, a radio access node of the radio access network receives downlink data intended for the wireless communication device. The radio access node transmits a paging message to the wireless communication device in response to receiving the downlink data. When a response to the paging message is not received from the wireless communication device after a predetermined period of time, the radio access node transmits a paging assistance request to a core network node of a core network.

In a further aspect of the first example, the core network node escalates the paging message in response to the paging assistance request by distributing the paging message to one or more additional radio access nodes in the radio area network.

In a second example, a wireless communication device is provided. The wireless communication device is configured to reduce signaling load in a communication network and includes a transceiver, a processor coupled to the transceiver, and a memory. The memory contains instructions that, when executed by the processor, cause the wireless communication device to determine that the wireless communication device has moved from a first mobility area to a second mobility area of the wireless communication network. The instructions, when executed by the processor, further cause the wireless communication device to refrain from performing a location update with the wireless communication network via the transceiver in response to determining that the wireless communication device has moved from the first mobility area to the second mobility area.

In a third example, a communication network is provided. The communication network has a reduced signaling load and comprises a wireless communication device and a radio access network. The wireless communication device is configured to determine that the wireless communication device has moved from a first mobility area to a second mobility area of the radio access network. The wireless communication device is further configured to refrain from performing a location update with the radio access network in response to determining that the wireless communication device has moved from the first mobility area to the second mobility area.

In a fourth example, another wireless communication device is provided. The wireless communication device is configured to reduce signaling load in a communication network and includes a transceiver module and a mobility module. The transceiver module is operable to receive information identifying a plurality of mobility areas. The mobility module is operable to initiate a location update with the wireless communication network in response to determining that the wireless communication device has moved into a mobility area not included in the plurality of mobility areas. The mobility module is further operable to refrain from initiating a location update with the wireless communication network in response to determining that the wireless communication device has moved from a first mobility area included in the plurality of mobility areas to a second mobility area included in the plurality of mobility areas.

In a fifth example, a computer program product stored on a non-transitory computer-readable storage medium is provided. The computer program product includes instructions configured to cause a processor to carry out the steps of determining, in a wireless communication device, that the wireless communication device has moved from a first mobility area to a second mobility area of the radio access network. The instructions are further configured to cause the processor to refrain, in the wireless communication device, from performing a location update with the radio access network in response to determining that the wireless communication device has moved from the first mobility area to the second mobility area.

Those skilled in the art will appreciate the scope of the disclosure and realize additional aspects thereof after reading the following detailed description of the embodiments in association with the accompanying drawing figures.

### BRIEF DESCRIPTION OF THE DRAWINGS

The drawings illustrate selected embodiments of the disclosed subject matter. In the drawings, like reference labels denote like features.
FIG. 1 is a diagram illustrating a communication network.
FIG. 2 is a diagram illustrating a wireless communication device.
FIG. 3 is a diagram illustrating a radio access node.
FIG. 4 is a functional block diagram illustrating aspects of the communication network.
FIG. 5 is a first signaling flow diagram illustrating a connectivity management method in accordance with an embodiment of the invention.
FIG. 6 is a second signaling flow diagram illustrating a connectivity management method in accordance with an embodiment of the invention.
FIG. 7 is a method flow chart depicting steps carried out by a UE in accordance with an embodiment of the invention.
FIG. 8 is a method flow chart depicting steps carried out by a radio access node in accordance with an embodiment of the invention.
FIG. 9 is a method flow chart depicting steps carried out by a core network node in accordance with an embodiment of the invention.
FIG. 10 is method flow chart depicting steps carried out by another radio access node in accordance with an embodiment of the invention.
FIG. 11 is a functional block diagram of the wireless communication device in accordance with another embodiment of the invention.

### DETAILED DESCRIPTION

The following description presents various embodiments of the disclosed subject matter. These embodiments are presented as teaching examples and are not to be construed as limiting the scope of the disclosed subject matter. For example, certain details of the described embodiments may be modified, omitted, or augmented without departing from the scope of the described subject matter.

In general, the disclosed subject matter provides efficient methods, nodes, and systems for connectivity management with wireless communication devices that are considered Connected in the CN but do not maintain a physical radio link connection to the RAN. In one embodiment, a wireless communication device that does not maintain a physical radio link connection to the RAN does not signal to the RAN when it moves to another MA. As discussed above, a paging failure may therefore result when the CN tries to forward data to the wireless communication device through a radio access node in an old MA. In response to a paging failure, the RAN requests the CN to page the wireless communication device over a larger area, e.g. a multiplicity of MAs or a registration area (e.g. a Tracking Area). When the wireless communication device replies to the page with a paging response, data buffered in the radio access node of the old MA is forwarded to a radio access node through which the paging response is received. Thus, wireless communication device reachability is maintained without the inefficient signaling required to track wireless communication devices as they move across and between different MAs.

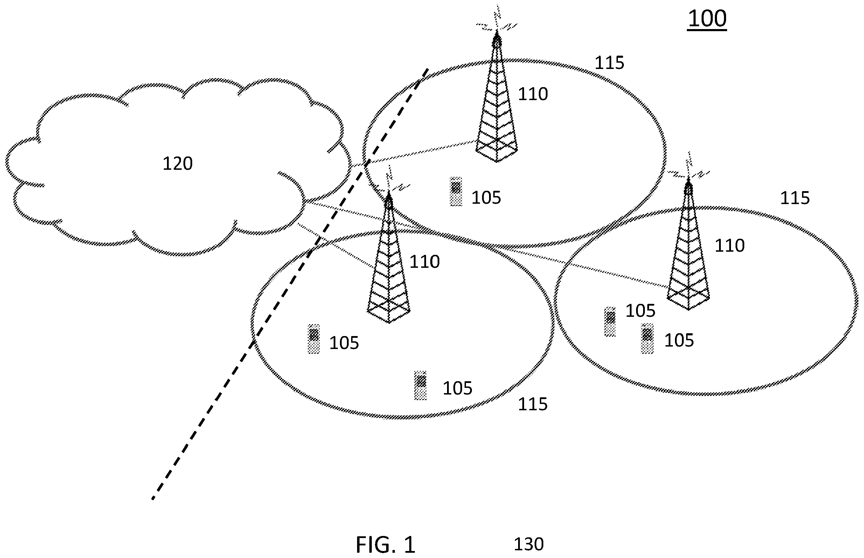

The described embodiments may be implemented in any appropriate type of communication system supporting any suitable communication standards and using any suitable components. As one example, certain embodiments may be implemented in an LTE network, such as that illustrated in FIG. 1.

Referring to FIG. 1, a communication network 100 comprises a plurality of wireless communication devices 105 (e.g., conventional UEs, machine type communication (MTC) / machine-to-machine (M2M) UEs) and a plurality of radio access nodes 110 (e.g., eNBs or other base stations). Communication network 100 is organized into cells 115 connected to a CN 120 via corresponding radio access nodes 110. Radio access nodes 110 form part of a RAN 130 and are capable of communicating with wireless communication devices 105 along with any additional elements suitable to support communication between wireless communication devices or between a wireless communication device and another communication device (such as a landline telephone).

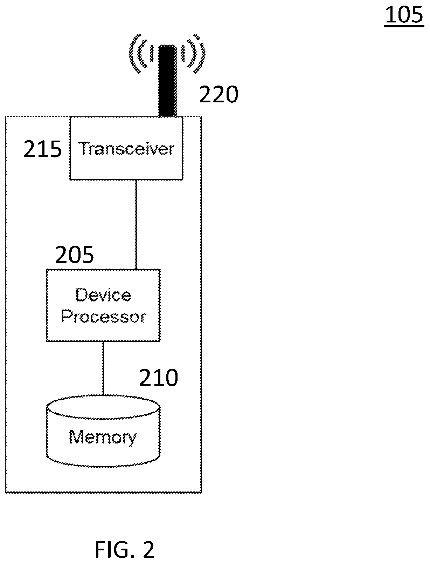

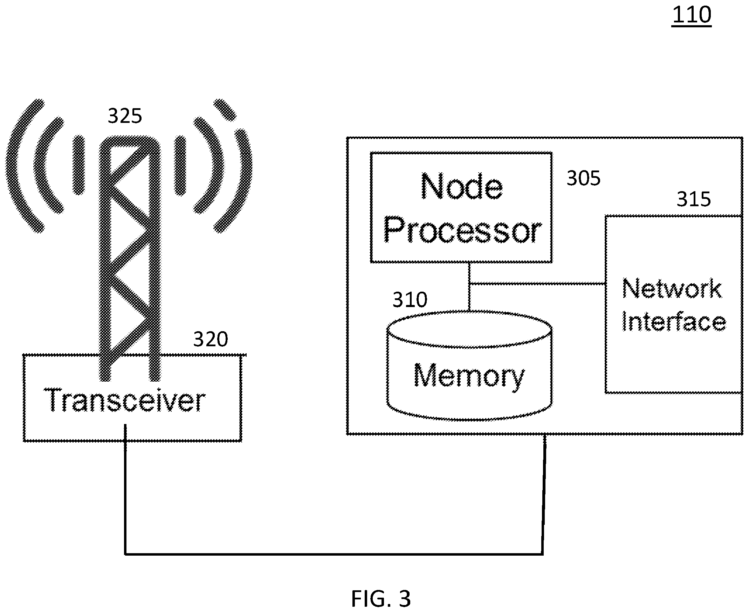

Although wireless communication devices 105 may represent communication devices that include any suitable combination of hardware and/or software, these wireless communication devices may, in certain embodiments, represent devices such as an example wireless communication device illustrated in greater detail by FIG. 2. Similarly, although the illustrated radio access node may represent network nodes that include any suitable combination of hardware and/or software, these nodes may, in particular embodiments, represent devices such as the example radio access node illustrated in greater detail by FIG. 3.

Referring to FIG. 2, a wireless communication device 105 (also referred to herein as UE 105) comprises a processor 205, a memory, a transceiver 215, and an antenna 220. In certain embodiments, some or all of the functionality described as being provided by UEs, MTC or M2M devices, and/or any other types of wireless communication devices may be provided by the device processor executing instructions stored on a computer-readable medium, such as the memory shown in FIG. 2. Alternative embodiments may include additional components beyond those shown in FIG. 2 that may be responsible for providing certain aspects of the device's functionality, including any of the functionality described herein.

Referring to FIG. 3, a radio access node 110 comprises a node processor 305, a memory 310, a network interface 315, a transceiver 320, and an antenna 325. In certain embodiments, some or all of the functionality described as being provided by a base station, a node B, an enodeB (eNB), and/or any other type of network node may be provided by node processor 305 executing instructions stored on a computer-readable medium, such as memory 310 shown in FIG. 3. Alternative embodiments of radio access node 110 may comprise additional components to provide additional functionality, such as the functionality described herein and/or related supporting functionality.

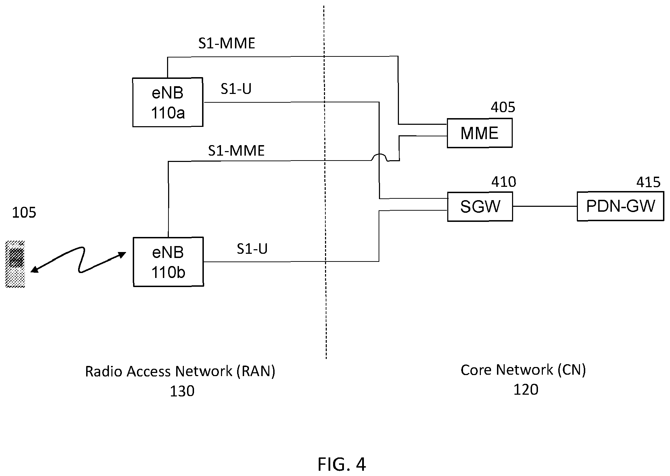

FIG. 4 is a functional block diagram view of an example embodiment of the communication network 100. Certain functional blocks within the CN 120 are depicted, including a Mobile Management Entity (MME) 405, a Serving Gateway (SGW) 410, and a Packet data network GateWay (PGW) 415. Moreover, two eNBs 110a, 110b, located in different MAs in the RAN 130, are depicted. The MME 405 is responsible for control plane traffic and communicates with each of the eNBs 110 over an S1-MME interface using an S1-Application Protocol (AP). The SGW 410 and PGW 415 are responsible for user plane traffic and the SGW 410 communicates with the eNBs 110 over S1-U interfaces. The SGW 410 communicates with the PGW 415 over an S5 interface and the PGW 415 transmits and receives uplink (UL) and downlink (DL) data, respectively, to/from a packet data network providing operator Internet Protocol (IP) services, such as IP Multimedia Subsystem (IMS), PSS etc.

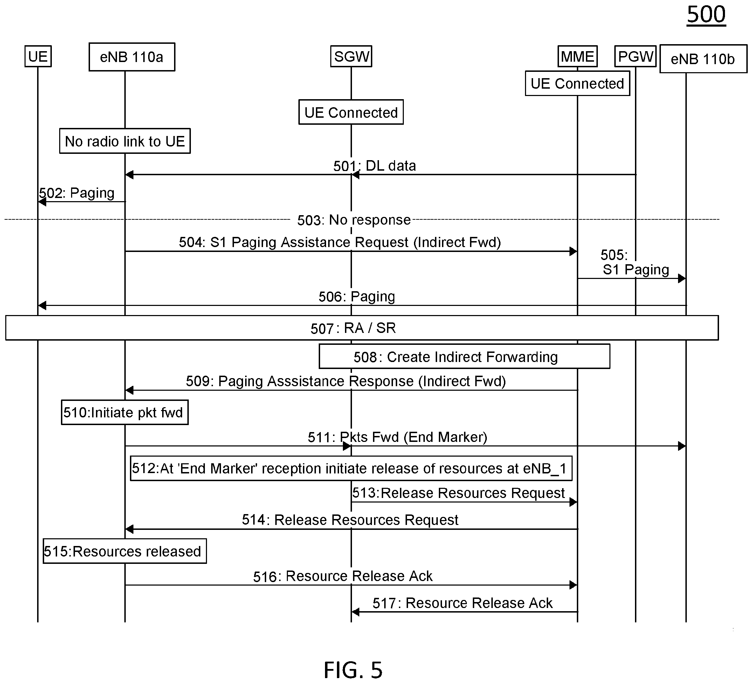

A UE 105 may roam from the MA of eNB 110a to the MA of eNB 110b. To reduce signaling load, however, the UE 105 may be permitted to forego any location update signaling to the RAN when it moves to the MA of eNB 110b. Thus, when DL data is to be sent from the CN 120 to the UE 105 a paging failure will occur. A method for connectivity management explained in detail with reference to FIG. 5 describes how such a paging failure is addressed.

FIG. 5 is a signaling flow diagram 500 of a first example connectivity management method for reducing signaling load in a wireless communication network. In the signaling flow diagram 500, DL data is sent from the CN 120 to the UE 105 in the RAN 130 when the UE 105 has moved to another MA without signaling its new location to the RAN. The signaling flow diagram 500 includes the following preconditions: 1) the state of the UE 105 from the perspective of the CN 120 (e.g. in the Enterprise Mobility Management (EMM) layer) is EMM Connected, and from the perspective of the RAN 130 the state of the UE 105 is RRC connected; 2) there is no radio link available between the RAN 130 and UE 105; and 3) eNB 110a does not know the location of UE 105 with cell level resolution.

At step 501 of the signaling flow diagram, CN 120 forwards DL Data to eNB 110a and the DL Data is buffered in eNB 110a. At step 502, given preconditions 2 and 3, eNB 110a transmits a paging message to UE 105 in an assumed MA (e.g., the MA of eNB110a). The transmission of the paging message may be repeated and at step 503, after a timeout period has elapsed, eNB 110a experiences a paging failure.

In accordance with one example connectivity management method, eNB 110a then asks CN 120 for paging assistance when the paging failure occurs. Thus, at step 504, eNB 110a sends a request for paging assistance to MME 405 on the S1-AP interface associated with the UE 105. The paging assistance request indicates that Indirect Forwarding is needed. Next, at step 505, MME 405 escalates the paging message in response to the paging assistance request to page UE 105 over a larger area, e.g. an area that includes eNB 110b. The larger area may be determined in accordance with a paging algorithm. MME 405 also enters a state that supervises a response to the paging of UE 105 from the RAN 130. Thus, when a page is successful, the radio access nodes of RAN 130 are configured to provide an explicit paging response message (as opposed to an implicit paging response message, such as the fact that a UE connection was established) to MME 405 indicating the paging success to MME 405. At step 506, eNB 110b executes paging over the relevant cells. At step 507, UE 105 replies to paging and the S1AP association between MME 405 and eNB 110b for UE 105 is established. If an initial page escalation is unsuccessful, steps 505 and 506 may be repeated as many times as necessary with increasingly larger and/or more distant paging areas until UE 105 replies to the paging or until a paging assistance termination criterion (or criteria) has been met (e.g., MME 405 has escalated the paging message a predetermined number of times). Where the paging succeeds, at step 508 MME 405 provides SGW 410 with the Tunnel Endpoint Identifier (TEID) at eNB 110b and requests SGW 410 to enable Indirect Forwarding. At step 509, MME 405 sends a Paging Assistance Response message back to eNB 110a providing an indication that Indirect Forwarding is possible providing the necessary SGW TEID. At step 510, eNB 110a initiates a packet forward procedure to forward the DL data received in step 501 that has triggered paging to SGW 410 and at step 511 the DL data is forwarded to eNB 110b (eNB 110a includes an 'End Marker' in the relevant DL data). At step 512, SGW 410 detects reception of the 'End Marker' and requests MME 405 to release the resources in eNB 110a. A possible sequence for releasing the resources in eNB 110a is illustrated in steps 513, 514, 515, 516 and 517. SGW 410 then starts using an S1-U tunnel to eNB 110b for communication with UE 105.

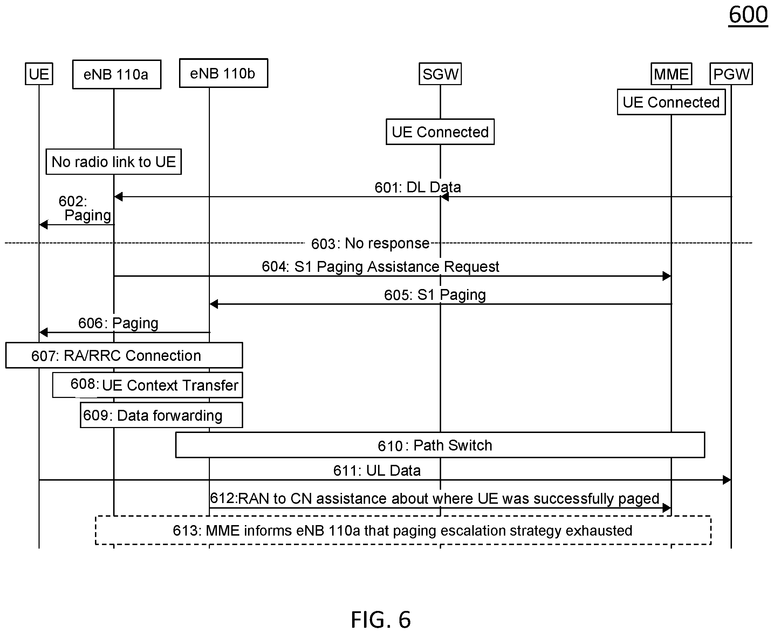

FIG. 6 is a signaling flow diagram 600 of a second example connectivity management method for reducing signaling load in a wireless communication network. The signaling flow diagram 600 differs from the signaling flow diagram 500 in that the MME 405 of signaling flow diagram 600 is stateless, i.e., the MME 405 does not enter a state expecting a page response from the UE or otherwise supervise the paging procedure once it has been escalated. Thus, the RAN 130 must transmit paging assistance requests to the CN 120 to escalate the paging message in the CN 120 when a previous iteration of the paging message has failed.

As with the signaling flow diagram 500, the signaling flow diagram 600 includes the various preconditions. First, the state of UE 105 from the perspective of the CN 120 (e.g. in the Enterprise Mobility Management (EMM) layer) is EMM Connected, and from the perspective of the RAN 130 is RRC connected or RRC Connected Inactive. When in the RRC Connected Inactive state the UE Context (Access Stratum Context) is stored in the eNB 110a and the UE has also stored its Access Stratum Context. There is a connection between the CN 120 and the eNB 110a that enables the CN (e.g., the SGW 410) to forward downlink data to the eNB 110a, i.e., the S1-U tunnel for UE 105 is established. A second precondition is that there is no radio link available between the RAN 130 and UE 105. Finally, a third precondition is that eNB 110a does not know the location of UE 105 with cell level resolution.

In the signaling flow diagram 600, DL data is sent from the CN 120 to the UE 105 in the RAN 130 when the UE 105 has moved to another MA without signaling its new location to the RAN. At step 601, CN 120 forwards DL Data to eNB 110a and the DL Data is buffered in eNB 110a. At step 602, given the second and third preconditions, eNB 110a pages UE 105 in an assumed MA. For example, eNB 110a transmits a paging message to UE 105 on all cells configured on eNB 110a or a subset of such cells. In one embodiment, eNB 110a also pages UE 105 over cells configured on eNBs that have X2 connectivity with eNB 110a. The list of cells that are candidates for paging can be created by eNB 110a with or without assistance from CN 120 as well as based on the UE's mobility information propagated to eNB 110a from other eNBs or the UE itself. As part of step 602, eNB 110a enters a state where it supervises UE's 105 page response. Several page attempts may be performed during a timeout period of a paging response supervision timer in eNB 110a (not shown). The timeout period of the timer can be configured based on the type of DL Data that triggered the paging procedure, e.g., bearer type or data flow type described by characteristics such as Allocation and Retention Priority, the Priority being expressed through other associated attributes signaled from the CN 120 prior to paging. Each page attempt may use knowledge in eNB 110a about DRX cycles of UE 105. Moreover, each page attempt may take into account where eNB 110a may have expanded the search area in previous page attempts. For example, a search area may be expanded for each page attempt or several page attempts may be made for the same area for redundancy.

At step 603, after the timeout period of the timer has elapsed without a page response, eNB 110a experiences a paging failure. At step 604, eNB 110a sends a request for paging assistance to MME 405 on the S1-AP interface associated with UE 105. In the paging assistance request eNB 110a provides paging assistance information to MME 405 to enable MME 405 to compile a paging message, e.g. the DRX configuration for UE 105, the Identity that might be needed for the paging procedure, information about where eNB 110a tried to page UE 105 already, the L1 characteristics used by eNB 110a for initial paging, e.g. beam specific information, transmission power, Modulation and Coding Scheme, time already spent by RAN 130 to find UE 105, a RAN paging attempt count number, the type of the Data that triggered the paging procedure (e.g., bearer type or data flow type described by characteristics such as Allocation and Retention Priority, the Priority being expressed through other associated attributes signaled from the CN 120 prior to paging), and/or a CN assisted paging attempt count number. Alternatively, all or a portion of such paging assistance information may be omitted and eNB 110a may compile the actual S1 paging message.

Next, at step 605, MME 405 escalates the paging message in response to the paging assistance request by forwarding or distributing the paging message over a larger area covered by one or more additional radio access nodes in the radio area network (130) including, in the example embodiment shown, eNB 110b. The determination of the escalated paging distribution area may be determined in accordance with a paging algorithm. In one embodiment, the escalated paging distribution area may be a plurality of CN registration areas of UE 105, such as a list of Tracking Areas for UE 105. Moreover, MME 405 may compile the S 1 paging message using paging assistance information provided in step 604 by eNB 110a. In addition, or alternatively, MME 405 may forward at least a portion of the paging assistance information when distributing the paging message to the one or more additional radio access nodes. Furthermore, unlike signaling flow diagram 500, MME 405 does not enter a state where it supervises the paging escalation procedure for a page response, i.e. it does not expect to receive a page response and thus makes use of a stateless approach.

At step 606, one or more additional eNBs including eNB 110b execute paging over the relevant cells, taking into account any relevant paging assistance information that may have been provided to it by MME 405. At step 607, UE 105 replies to paging and provides eNB 110b with an Identifier that is used by eNB 110b to locate the radio access node (eNB 110a in the specific embodiment described) that has stored the UE Context for UE 105.

If an initial page escalation is unsuccessful, steps 604, 605, and 606 may be repeated as many times as necessary with increasingly larger and/or more distant paging areas until UE 105 replies to the paging or until a paging assistance termination criterion (or criteria) has been met (represented by step 613, described further below). Where the paging succeeds, at step 608 the UE Context is transferred from eNB 110a to eNB 110b. The trigger for the transfer implicitly signals to eNB 110a that UE 105 has replied to paging, i.e., has served the paging response procedure, and enables eNB 110a to stop its paging response supervision timer. Alternatively, the context transfer trigger received from eNB 110b can include an explicit paging response indicator.

At step 609, DL Data buffered in eNB 110a in step 601 is then forwarded to eNB 110b and encrypted in eNB 110b according to the encryption parameters valid for the connection between the UE and eNB 110b. At step 610, a Path Switch to switch the S1-U tunnels is conducted. At step 611, UE 105 may transmit UL Data to PGW 415 and additional DL Data may be forwarded to UE 105 over a new S1-U tunnel created by the Path Switch in step 610.

At step 612, eNB 110a may inform MME 405 about the paging result in a paging result message to aid MME 405 in future paging attempts. The paging result message may include, for example, include an indication or identifier of a last cell in which UE 105 reported its location, an indication or identifier of a cell in which UE 105 was found, number of paging attempts, and/or an amount of time elapsed since UE 105 was last active.

If UE 105 cannot be found after a paging escalation strategy has been exhausted, as determined by a predetermined termination criterion (or criteria), paging assistance by the CN 120 may be terminated at step 613. The termination criterion may be determined by RAN 130 (e.g., the RAN node that first requested paging assistance) or the CN 120 (e.g., MME 405). In one embodiment, MME 405 indicates termination of paging assistance to any eNBs requesting paging assistance (e.g., eNB 110a) after receiving a paging assistance request at step 604 and determining that a termination criterion has been met. One example termination criterion is when MME 405 determines it has no more possible escalation steps (e.g., a full search or a predetermined number of full searches with all radio access nodes within a Tracking Area of UE 105 have already been paged). The number of escalation steps may be predetermined or may be adaptive depending on an amount of time spent or a number of attempts by RAN 130 to page UE 105. In this embodiment, step 613 includes MME 405 transmitting a response message to a paging assistance request from RAN 130 (depicted at step 604) to terminate requests for CN paging assistance. Steps 605 and 606 (and, if step 606 is successful, steps 607 through 612) may still be carried out one last time to fulfill the final paging assistance request. Another alternative termination criterion is for the RAN node that initiated paging assistance to evaluate a termination criterion instead of the CN 120. For example, a termination criterion may be when the RAN node that initiated paging assistance from the CN 120 (e.g., eNB 110a) has exhausted a predetermined maximum number of paging attempts. The predetermined number of paging attempts may be equal to or greater than the number of possible escalation steps MME 405 can carry out.

Excessive signaling load may be another termination criterion applied independently of or in combination with the foregoing alternatives. For example, MME 405 may determine (or may receive an indication from another node in CN 120) that signaling load is too high and in response to such a determination may transmit a response message to a paging assistance request from RAN 130 to terminate the CN paging assistance. In one embodiment, the response message includes a termination reason and, if the termination reason is excessive load, the RAN 130 may respond by trying to page UE 105 after a back off period.

The steps of signaling flow diagrams 500 and 600 demonstrate how different example embodiments may operate and are not intended to be strictly limiting. For example, additional signals may be transmitted and received, certain transmissions may be omitted, and/or may be rearranged with respect to other transmissions. For instance, signaling flow diagram 600 may include additional steps by which MME 405 releases resources in eNB 110a after a successful paging by eNB 110b. Moreover, the data forwarding and associated functions described in steps 508 through 512 of signaling flow diagram 500 (and in similar steps 607 through 609 of signaling flow diagram 600) may be omitted if the eNB requesting paging assistance (eNB 110a) is the same as the eNB (eNB 110b) that ultimately finds UE 105. Instead of performing the Indirect Forwarding steps an intra eNB handover may be performed where packet forwarding is handled within the eNB. The target and source eNB may be the same when, for example, eNB 110a performs the initial paging at step 502 in a single cell, beam, or sector associated with eNB 110a, i.e., not the full coverage of eNB 110a. Another reason could be that UE 105 is classed as very delay sensitive and cannot handle an escalation stair and instead the CN 120 uses the full paging area directly (i.e., a full escalation step of CN 120 is used from the start, instead of escalating step by step).

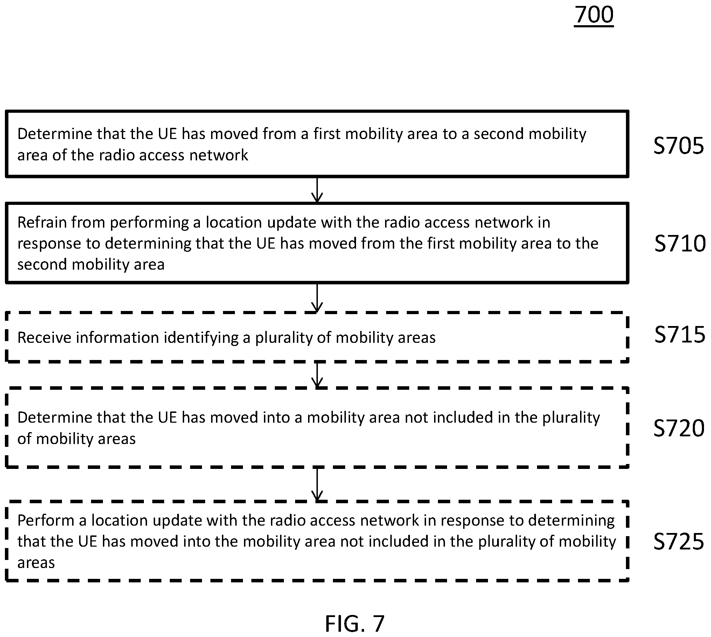

FIGs. 7-10 depict various method flow charts implemented by various nodes (e.g., UEs, radio access nodes, and core network nodes) in a communication network consistent with the signaling flow diagrams described above.

FIG. 7 is a method flow chart depicting steps carried out by a UE, such as UE 105. In step S705, the UE determines that it has moved from a first mobility area to a second mobility area of the radio access network. Such a determination may be made directly by the UE, e.g., using a GPS location system, or the UE may receive a location data or reports indicating that the UE has moved to the second mobility area. Next, at step S710, the UE refrains from performing a location update with the radio access network in response to determining that it has moved from the first mobility area to the second mobility area. By refraining from performing the location update, a signaling load in the network is reduced.

At steps S715-S725, which are optional, (optionality of a step is indicated in the drawings with the use of dashed lines around the step), the UE may perform a location update if certain criteria are met. For example, the UE may receive, at step S715, information identifying a plurality of mobility areas. The information may be received, e.g., from RAN 130. The UE may later, at step S720, determine that it has moved into a mobility area not included in the plurality of mobility areas. Finally, at step S725, the UE performs a location update with the radio access network 130 in response to determining that it has moved into the mobility area not included in the plurality of mobility areas. In an alternative embodiment, the criterion for performing a location update may be expiration of a location update timer. The start of the predetermined period of time may occur immediately after a registration or may be triggered when the UE moves into a new mobility area. In yet another embodiment, both a location update timer and a list of mobility areas are used and a location update is performed if either the timer expires or the UE crosses into a mobility area that is not included in the list.

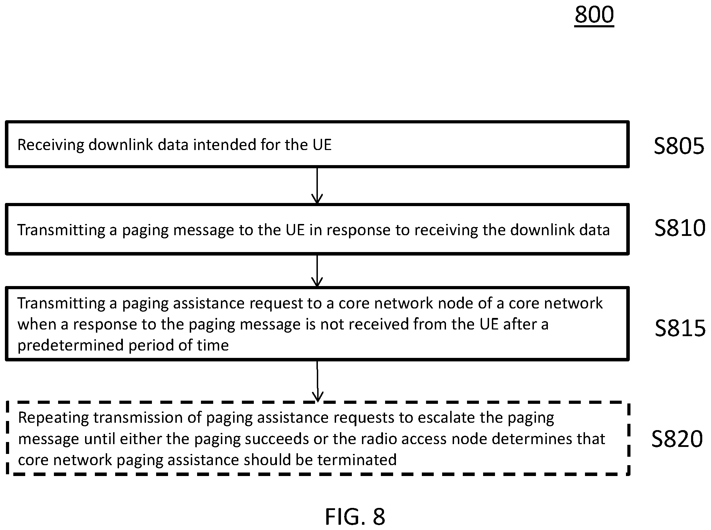

FIG. 8 is a method flow chart depicting steps carried out by a radio access node, such as eNB 110a, that initiates paging assistance from the CN 120. In step S805, DL Data intended for the UE is received by the radio access node. In step S810, the radio access node transmits a paging message to the UE in response to receiving the DL data. In step S815, the radio access node transmits a paging assistance request to a core network node of a core network when a response to the paging message is not received from the UE after a predetermined period of time. In step S820, which is optional, the radio access node repeats transmission of paging assistance requests to escalate the paging message until either the paging succeeds or the radio access node determines that core network paging assistance should be terminated. (Alternative criteria for termination paging assistance, described in connection with the signaling flow diagram 600 of FIG. 6, may also or instead be used.)

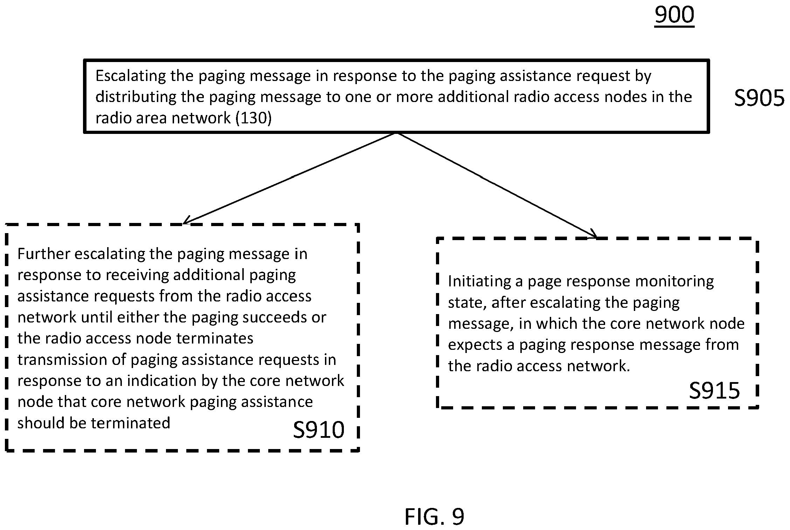

FIG. 9 is a method flow chart depicting steps carried out by a core network node, such as MME 405. In step S905, the core network node escalates a paging message in response to the paging assistance request transmitted in step S815, e.g., by distributing the paging message to one or more additional radio access nodes in the RAN 130.

In step S910, the paging message may be further escalated by the core network node in response to receiving additional paging assistance requests from the radio access network. The further escalation may be performed until either the paging succeeds or the radio access node terminates transmission of paging assistance requests in response to an indication by the core network node that core network paging assistance should be terminated.

As an alternative to the optional embodiment of step S910, corresponding to a CN stateless approach, the core network node may initiate a page response monitoring state, in step S915, after escalating the paging message. In the page response monitoring state the core network node expects a paging response message from the RAN 130.

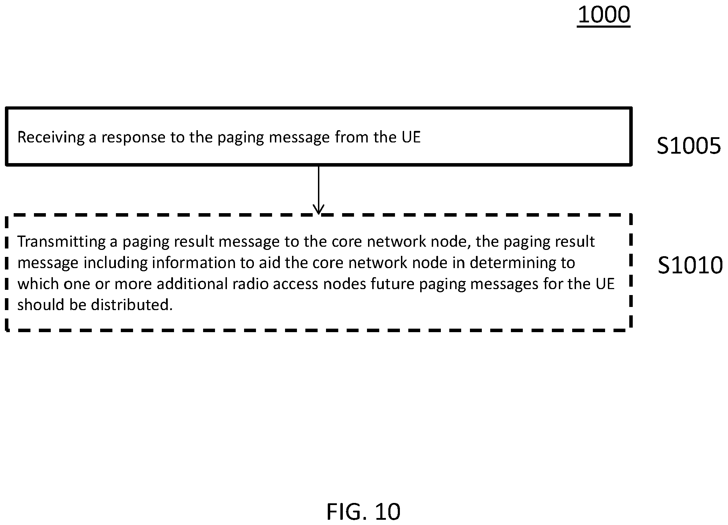

FIG. 10 is a method flow chart depicting steps carried out by a radio access node, such as eNB 110b, that successfully pages the UE after CN paging assistance has been invoked. In step S1005, a response to the paging message is received by the radio access node from the UE. At step S1010 a paging result message is optionally transmitted to the core network node. The paging result message may include information to aid the core network node in determining to which one or more additional radio access nodes future paging messages for the UE should be distributed.

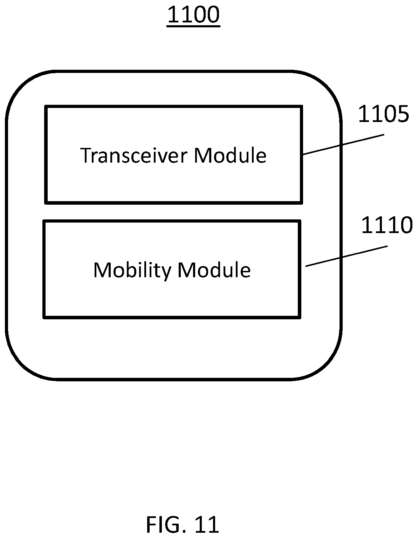

FIG. 11 is a block diagram of another embodiment of a UE 105. In this embodiment, UE 105 includes a transceiver module operable 1105 to receive information identifying a plurality of mobility areas. Furthermore, UE 105 includes a mobility module 1110 operable to initiate a location update with the wireless communication network in response to determining that UE 105 has moved into a mobility area not included in the plurality of mobility areas. The mobility module is further operable to refrain from initiating a location update with the wireless communication network in response to detecting that UE 105 has moved from a first mobility area included in the plurality of mobility areas to a second mobility area included in the plurality of mobility areas. Each of the modules 1105 and 1110 may be implemented in software in some embodiments.

By implementing this connectivity management method, the level of signaling in the network is reduced due to the UEs not being required to register as frequently while roaming in an idle state. Moreover, a signaling load incurred by the paging assistance steps (steps 505 and 506 in FIG. 5 and steps 604-606 in FIG. 6) may be considered too high and therefore in certain embodiments modifications are made to reduce signaling load. For example, as depicted in and described with reference to FIG. 7, each of the UEs may be provided by RAN 130 with a list of MAs within which the UE is free to roam without being required to register but once the UE moves outside of the list of MAs the UE may be required to register again and be provided with a new list of MAs within which the UE may roam without registration. Alternatively or in addition, a UE may be required to register with the RAN after a predetermined period of time has expired.

While the disclosed subject matter has been presented above with reference to various embodiments, it will be understood that various changes in form and details may be made to the described embodiments without departing from the overall scope of the invention.

## Claims

1. A method for reducing signaling load in a radio access network (130), the method comprising:
determining (S705), by a wireless communication device (105), that the wireless communication device has moved from a first mobility area to a second mobility area of the radio access network;
refraining (S710), by the wireless communication device (105), from performing a location update with the radio access network in response to determining that the wireless communication device has moved from the first mobility area to the second mobility area;
receiving (S715), by the wireless communication device (105), information identifying a plurality of mobility areas;
determining (S720) that the wireless communication device (105) has moved into a mobility area not included in the plurality of mobility areas; and
performing (S725), by the wireless communication device (105), a location update with the radio access network (130) in response to determining that the wireless communication device has moved into the mobility area not included in the plurality of mobility areas.

2. The method of claim 1, further comprising:
receiving (S805), at a radio access node (110) of the radio access network (130), downlink data intended for the wireless communication device (105);
transmitting (S810), by the radio access node (110), a paging message to the wireless communication device (105) in response to receiving the downlink data; and
transmitting (S815), by the radio access node (110), a paging assistance request to a core network node (405) of a core network (120) when a response to the paging message is not received from the wireless communication device (105) after a predetermined period of time.

3. The method of claim 2, further comprising:
escalating (S905) the paging message at the core network node (405) in response to the paging assistance request by distributing the paging message to one or more additional radio access nodes in the radio area network (130).

4. The method of claim 3, further comprising:
repeating (S820), by the radio access node (110) transmission of paging assistance requests to escalate the paging message until either the paging succeeds or the radio access node (110) determines that core network paging assistance should be terminated.

5. The method of claim 3, further comprising:
further escalating (S910) the paging message in response to receiving additional paging assistance requests from the radio access network until either the paging succeeds or the radio access node (110) terminates transmission of paging assistance requests in response to an indication by the core network node (405) that core network paging assistance should be terminated.

6. The method of claim 3, further comprising:
initiating (S915) a page response monitoring state, at the core network node (405), after escalating the paging message, in which the core network node expects a paging response message from the radio access network.

7. The method of claim 3-6, further comprising:
receiving (S1005), by at least one of the one or more additional radio access nodes, a response to the paging message from the wireless communication device (105); and
transmitting (S1010) by the at least one of the one or more additional radio access nodes, a paging result message to the core network node (405), the paging result message including information to aid the core network node in determining to which one or more additional radio access nodes future paging messages for the wireless communication device (105) should be distributed.

8. A wireless communication device (105) configured to reduce signaling load in a communication network, the wireless communication device comprising:
a transceiver (215);
a processor (205) coupled to the transceiver;
a memory (210) containing instructions that, when executed by the processor, cause the wireless communication device to:
determine that the wireless communication device has moved from a first mobility area to a second mobility area of the wireless communication network;
refrain from performing a location update with the wireless communication network via the transceiver in response to determining that the wireless communication device has moved from the first mobility area to the second mobility area;
receive information identifying a plurality of mobility areas;
determine that the wireless communication device (105) has moved into a mobility area not included in the plurality of mobility areas; and
perform a location update with the radio access network (130) in response to determining that the wireless communication device has moved into the mobility area not included in the plurality of mobility areas.

9. The wireless communication device of claim 8, wherein the instructions, when executed by the processor, further cause the wireless communication device to:
receive, via the transceiver, information identifying a plurality of mobility areas;
determine that the wireless communication device (105) has moved into a mobility area not included in the plurality of mobility areas; and
perform a location update with the radio access network (130) in response to detecting that the wireless communication device (105) has moved into the mobility area not included in the plurality of mobility areas.

10. A communication network (100) in which a signaling load is reduced, the communication network (100) comprising:
a wireless communication device (105); and
a radio access network (130);
wherein, the wireless communication device (105) is configured to:
determine that the wireless communication device (105) has moved from a first mobility area to a second mobility area of the radio access network;
refrain from performing a location update with the radio access network in response to determining that the wireless communication device (105) has moved from the first mobility area to the second mobility area;
receive information identifying a plurality of mobility areas;
determine that the wireless communication device (105) has moved into a mobility area not included in the plurality of mobility areas; and
perform a location update with the radio access network (130) in response to determining that the wireless communication device has moved into the mobility area not included in the plurality of mobility areas.

11. The communication network (100) of claim 10, further comprising:
a core network including a core network node,
wherein the radio access network includes a plurality of radio access nodes, one or more of the radio access nodes being configured to:
receive downlink data intended for the wireless communication device (105);
transmit a paging message to the wireless communication device (105) in response to receiving the downlink data; and
transmit a paging assistance request to the core network node when a response to the paging message is not received from the wireless communication device (105) after a predetermined period of time.

12. The communication network (100) of claim 11, wherein the core network node is configured to escalate the paging message in response to the paging assistance request by distributing the paging message to one or more additional radio access nodes in the radio area network (130).

13. The communication network (100) of claim 12, wherein the core network node is configured to:
initiate a page response monitoring state, after escalating the paging message, in which the core network node expects a paging response message from the radio access network.

14. A computer program product stored on a non-transitory computer-readable storage medium (210) and including instructions configured to cause a processor (205) to carry out the steps of:
determining (S705), in a wireless communication device (105), that the wireless communication device has moved from a first mobility area to a second mobility area of the radio access network;
refraining (S710), in the wireless communication device (105), from performing a location update with the radio access network in response to determining that the wireless communication device has moved from the first mobility area to the second mobility area;
receiving (S715), by the wireless communication device (105), information identifying a plurality of mobility areas;
determining (S720) that the wireless communication device (105) has moved into a mobility area not included in the plurality of mobility areas; and
performing (S725), by the wireless communication device (105), a location update with the radio access network (130) in response to determining that the wireless communication device has moved into the mobility area not included in the plurality of mobility areas.

## Patentansprüche

1. Verfahren zur Reduzierung von Signalisierungslast in einem Funkzugangsnetzwerk (130), wobei das Verfahren umfasst:
Bestimmen (S705) durch eine drahtlose Kommunikationsvorrichtung (105), dass die drahtlose Kommunikationsvorrichtung sich aus einem ersten Mobilitätsbereich in einen zweiten Mobilitätsbereich des Funkzugangsnetzwerks bewegt hat;
Unterlassen (S710) durch die drahtlose Kommunikationsvorrichtung (105) des Durchführens einer Standortaktualisierung beim Funkzugangsnetzwerk in Reaktion auf das Bestimmen, dass die drahtlose Kommunikationsvorrichtung sich aus dem ersten Mobilitätsbereich in den zweiten Mobilitätsbereich bewegt hat;
Empfangen (S715) durch die drahtlose Kommunikationsvorrichtung (105) von Informationen, die eine Mehrzahl von Mobilitätsbereichen identifizieren;
Bestimmen (S720), dass die drahtlose Kommunikationsvorrichtung (105) sich in einen Mobilitätsbereich bewegt hat, der in der Mehrzahl von Mobilitätsbereichen nicht enthalten ist; und
Durchführen (S725) durch die drahtlose Kommunikationsvorrichtung (105) einer Standortaktualisierung beim Funkzugangsnetzwerk (130) in Reaktion auf das Bestimmen, dass die drahtlose Kommunikationsvorrichtung sich in den Mobilitätsbereich bewegt hat, der in der Mehrzahl von Mobilitätsbereichen nicht enthalten ist.

2. Verfahren nach Anspruch 1, ferner umfassend:
Empfangen (S805) von Downlink-Daten, die für die drahtlose Kommunikationsvorrichtung (105) bestimmt sind, an einem Funkzugangsknoten (110) des Funkzugangsnetzwerks (130);
Senden (S810) einer Funkrufnachricht durch den Funkzugangsknoten (110) an die drahtlose Kommunikationsvorrichtung (105) in Reaktion auf den Empfang der Downlink-Daten; und
Senden (S815) durch den Funkzugangsknoten (110) einer Funkrufassistenzanforderung an einen Kernnetzwerkknoten (405) eines Kernnetzwerks (120), wenn nach einem vorbestimmten Zeitraum keine Antwort auf die Funkrufnachricht von der drahtlosen Kommunikationsvorrichtung (105) empfangen wird.

3. Verfahren nach Anspruch 2, ferner umfassend:
Eskalieren (S905) der Funkrufnachricht an den Kernnetzwerkknoten (405) in Reaktion auf die Funkrufassistenzanforderung durch Verteilen der Funkrufnachricht an einen oder mehrere zusätzliche Funkzugangsknoten im Funkzugangsnetzwerk (130).

4. Verfahren nach Anspruch 3, ferner umfassend:
Wiederholen (S820) der Übertragung von Funkrufassistenzanforderungen zum Eskalieren der Funkrufnachricht durch den Funkzugangsknoten (110), bis entweder der Funkruf erfolgreich ist oder Funkzugangsknoten (110) bestimmt, dass die Kernnetzwerk-Funkrufassistenz beendet werden sollte.

5. Verfahren nach Anspruch 3, ferner umfassend:
Weitereskalieren (S910) der Funkrufnachricht in Reaktion auf den Empfang von zusätzlichen Funkrufassistenzanforderungen vom Funknetzwerkknoten, bis entweder der Funkruf erfolgreich ist oder der Funkzugangsknoten (110) die Übertragung von Funkrufassistenzanforderungen in Reaktion auf eine Angabe durch den Kernnetzwerkknoten (405) beendet, dass die Kernnetzwerk-Funkrufassistenz beendet werden sollte.

6. Verfahren nach Anspruch 3, ferner umfassend:
Initiieren (S915) eines Funkrufantwortüberwachungszustands am Kernnetzwerkknoten (405) nach dem Eskalieren der Funkrufnachricht, in welchem der Kernnetzwerkknoten eine Funkrufantwortnachricht vom Funkzugangsnetzwerk erwartet.

7. Verfahren nach Anspruch 3 bis 6, ferner umfassend:
Empfangen (S1005) durch mindestens einen des einen oder der mehreren zusätzlichen Funkzugangsknoten einer Antwort auf die Funkrufnachricht von der drahtlosen Kommunikationsvorrichtung (105); und
Senden (S1010) durch den mindestens einen des einen oder der mehreren zusätzlichen Funkzugangsknoten einer Funkrufergebnisnachricht an den Kernnetzwerkknoten (405), wobei die Funkrufergebnisnachricht Informationen zum Unterstützen des Kernnetzwerkknotens (105) beim Bestimmen umfasst, an welchen oder welche zusätzlichen Funkzugangsknoten künftige Nachrichten für die drahtlose Kommunikationsvorrichtung (105) verteilt werden sollten.

8. Drahtlose Kommunikationsvorrichtung (105), die zum Reduzieren von Signalisierungslast in einem Kommunikationsnetzwerk konfiguriert ist, wobei die drahtlose Kommunikationsvorrichtung umfasst:
einen Sendeempfänger (215);
einen Prozessor (205), der mit dem Sendeempfänger gekoppelt ist;
einen Speicher (210), der Anweisungen speichert, die bei Ausführung durch den Prozessor die drahtlose Kommunikationsvorrichtung veranlassen zum:
Bestimmen, dass die drahtlose Kommunikationsvorrichtung sich aus einem ersten Mobilitätsbereich in einen zweiten Mobilitätsbereich des drahtlosen Kommunikationsnetzwerks bewegt hat;
Unterlassen des Durchführens einer Standortaktualisierung beim drahtlosen Kommunikationsnetzwerk über den Sendeempfänger in Reaktion auf das Bestimmen, dass die drahtlose Kommunikationsvorrichtung sich aus dem ersten Mobilitätsbereich in den zweiten Mobilitätsbereich bewegt hat;
Empfangen von Informationen, die eine Mehrzahl von Mobilitätsbereichen identifizieren;
Bestimmen, dass die drahtlose Kommunikationsvorrichtung (105) sich in einen Mobilitätsbereich bewegt hat, der in der Mehrzahl von Mobilitätsbereichen nicht enthalten ist; und
Durchführen einer Standortaktualisierung beim Funkzugangsnetzwerk (130) in Reaktion auf das Bestimmen, dass die drahtlose Kommunikationsvorrichtung sich in den Mobilitätsbereich bewegt hat, der in der Mehrzahl von Mobilitätsbereichen nicht enthalten ist.

9. Drahtlose Kommunikationsvorrichtung nach Anspruch 8, wobei die Anweisungen bei Ausführung durch den Prozessor die drahtlose Kommunikationsvorrichtung ferner veranlassen zum:
Empfangen von Informationen, die eine Mehrzahl von Mobilitätsbereichen identifizieren, über den Sendeempfänger;
Bestimmen, dass die drahtlose Kommunikationsvorrichtung (105) sich in einen Mobilitätsbereich bewegt hat, der nicht in der Mehrzahl von Mobilitätsbereichen enthalten ist; und
Durchführen einer Standortaktualisierung beim Funkzugangsnetzwerk (130) in Reaktion auf das Erkennen, dass die drahtlose Kommunikationsvorrichtung (105) sich in den Mobilitätsbereich bewegt hat, der in der Mehrzahl von Mobilitätsbereichen nicht enthalten ist.

10. Kommunikationsnetzwerk (100), in welchem eine Signalisierungslast reduziert wird, wobei das Kommunikationsnetzwerk (100) umfasst:
eine drahtlose Kommunikationsvorrichtung (105); und
ein Funkzugangsnetzwerk (130);
wobei die drahtlose Kommunikationsvorrichtung (105) konfiguriert ist zum:
Bestimmen, dass die drahtlose Kommunikationsvorrichtung (105) sich aus einem ersten Mobilitätsbereich in einen zweiten Mobilitätsbereich des Funkzugangsnetzwerks bewegt hat;
Unterlassen des Durchführens einer Standortaktualisierung beim Funkzugangsnetzwerk in Reaktion auf das Bestimmen, dass die drahtlose Kommunikationsvorrichtung (105) sich aus dem ersten Mobilitätsbereich in den zweiten Mobilitätsbereich bewegt hat;
Empfangen von Informationen, die eine Mehrzahl von Mobilitätsbereichen identifizieren;
Bestimmen, dass die drahtlose Kommunikationsvorrichtung (105) sich in einen Mobilitätsbereich bewegt hat, der in der Mehrzahl von Mobilitätsbereichen nicht enthalten ist; und
Durchführen einer Standortaktualisierung beim Funkzugangsnetzwerk (130) in Reaktion auf das Bestimmen, dass die drahtlose Kommunikationsvorrichtung sich in den Mobilitätsbereich bewegt hat, der in der Mehrzahl von Mobilitätsbereichen nicht enthalten ist.

11. Kommunikationsnetzwerk (100) nach Anspruch 10, ferner umfassend:
ein Kernnetzwerk, das einen Kernnetzwerkknoten umfasst,
wobei das Funkzugangsnetzwerk eine Mehrzahl von Funkzugangsknoten umfasst, wobei einer oder mehrere der Funkzugangsknoten konfiguriert sind zum:
Empfangen von Downlink-Daten, die für die drahtlose Kommunikationsvorrichtung (105) bestimmt sind;
Senden einer Funkrufnachricht an die drahtlose Kommunikationsvorrichtung (105) in Reaktion auf den Empfang der Downlink-Daten; und
Senden einer Funkrufassistenzanforderung an einen Kernnetzwerkknoten, wenn nach einem vorbestimmten Zeitraum keine Antwort auf die Funkrufnachricht von der drahtlosen Kommunikationsvorrichtung (105) empfangen wird.

12. Kommunikationsnetzwerk (100) nach Anspruch 11, wobei der Kernnetzwerkknoten so konfiguriert ist, dass er die Funkrufnachricht in Reaktion auf die Funkrufassistenzanforderung durch Verteilen der Funkrufnachricht an einen oder mehrere zusätzliche Funkzugangsknoten im Funkzugangsnetzwerk (130) eskaliert.

13. Kommunikationsnetzwerk (100) nach Anspruch 12, wobei der Kernnetzwerkknoten konfiguriert ist zum:
Initiieren eines Funkrufantwortüberwachungszustands nach dem Eskalieren der Funkrufnachricht, in welchem der Kernnetzwerkknoten eine Funkrufantwortnachricht vom Funkzugangsnetzwerk erwartet.

14. Computerprogrammprodukt, das auf einem nichttransitorischen computerlesbaren Speichermedium (210) gespeichert ist und Anweisungen umfasst, die so konfiguriert sind, dass sie einen Prozessor (205) veranlassen, die folgenden Schritte auszuführen:
Bestimmen (S705) in einer drahtlosen Kommunikationsvorrichtung (105), dass die drahtlose Kommunikationsvorrichtung sich aus einem ersten Mobilitätsbereich in einen zweiten Mobilitätsbereich des Funkzugangsnetzwerks bewegt hat;
Unterlassen (S710) in der drahtlosen Kommunikationsvorrichtung (105) des Durchführens einer Standortaktualisierung beim Funkzugangsnetzwerk in Reaktion auf das Bestimmen, dass die drahtlose Kommunikationsvorrichtung sich aus dem ersten Mobilitätsbereich in den zweiten Mobilitätsbereich bewegt hat;
Empfangen (S715) durch die drahtlose Kommunikationsvorrichtung (105) von Informationen, die eine Mehrzahl von Mobilitätsbereichen identifizieren;
Bestimmen (S720), dass die drahtlose Kommunikationsvorrichtung (105) sich in einen Mobilitätsbereich bewegt hat, der in der Mehrzahl von Mobilitätsbereichen nicht enthalten ist; und
Durchführen (S725) durch die drahtlose Kommunikationsvorrichtung (105) einer Standortaktualisierung beim Funkzugangsnetzwerk (130) in Reaktion auf das Bestimmen, das sich die drahtlose Kommunikationsvorrichtung in den Mobilitätsbereich bewegt hat, der in der Mehrzahl von Mobilitätsbereichen nicht enthalten ist.

## Revendications

1. Procédé de réduction de charge de signalisation dans un réseau d'accès radio (130), le procédé comprenant :
la détermination (S705), par un dispositif de communication sans fil (105), que le dispositif de communication sans fil s'est déplacé d'une première zone de mobilité à une deuxième zone de mobilité du réseau d'accès radio ;
le renoncement (S710), par le dispositif de communication sans fil (105), à l'exécution d'une mise à jour d'emplacement avec le réseau d'accès radio en réponse à la détermination que le dispositif de communication sans fil s'est déplacé de la première zone de mobilité à la deuxième zone de mobilité ;
la réception (S715), par le dispositif de communication sans fil (105), d'informations identifiant une pluralité de zones de mobilité ;
la détermination (S720) que le dispositif de communication sans fil (105) s'est déplacé dans une zone de mobilité non incluse dans la pluralité de zones de mobilité ; et
l'exécution (S725), par le dispositif de communication sans fil (105), d'une mise à jour d'emplacement avec le réseau d'accès radio (130) en réponse à la détermination que le dispositif de communication sans fil s'est déplacé dans la zone de mobilité non incluse dans la pluralité de zones de mobilité.

2. Procédé selon la revendication 1, comprenant en outre :
la réception (S805), à un noeud d'accès radio (110) du réseau d'accès radio (130), de données de liaison descendante destinées au dispositif de communication sans fil (105) ;
la transmission (S810), par le noeud d'accès radio (110), d'un message de radiomessagerie au dispositif de communication sans fil (105) en réponse à la réception des données de liaison descendante ; et
la transmission (S815), par le noeud d'accès radio (110), d'une demande d'assistance de radiomessagerie à un noeud de réseau central (405) d'un réseau central (120) lorsqu'une réponse au message de radiomessagerie n'est pas reçue en provenance du dispositif de communication sans fil (105) après une période de temps prédéterminée.

3. Procédé selon la revendication 2, comprenant en outre :
la remontée (S905) du message de radiomessagerie au noeud de réseau central (405) en réponse à la demande d'assistance de radiomessagerie par la diffusion du message de radiomessagerie à un ou plusieurs noeuds d'accès radio supplémentaires dans le réseau d'accès radio (130).

4. Procédé selon la revendication 3, comprenant en outre :
la répétition (S820), par le noeud d'accès radio (110), d'une transmission de demandes d'assistance de radiomessagerie pour faire remonter le message de radiomessagerie jusqu'à la réussite de la radiomessagerie ou jusqu'à la détermination, par le noeud d'accès radio (110), qu'une assistance de radiomessagerie de réseau central doit être terminée.

5. Procédé selon la revendication 3, comprenant en outre :
la poursuite de la remontée (S910) du message de radiomessagerie en réponse à la réception de demandes d'assistance de radiomessagerie supplémentaires en provenance du réseau d'accès radio jusqu'à la réussite de la radiomessagerie ou jusqu'à la terminaison, par le noeud d'accès radio (110), d'une transmission de demandes d'assistance de radiomessagerie en réponse à une indication, par le noeud de réseau central (405), qu'une assistance de radiomessagerie de réseau central doit être terminée.

6. Procédé selon la revendication 3, comprenant en outre :
le lancement (S915) d'un état de surveillance de réponse de radiomessagerie, au noeud de réseau central (405), après la remontée du message de radiomessagerie, dans lequel le noeud de réseau central attend un message de réponse de radiomessagerie en provenance du réseau d'accès radio.

7. Procédé selon l'une quelconque des revendications 3 à 6, comprenant en outre :
la réception (S1005), par au moins l'un des un ou plusieurs noeuds d'accès radio supplémentaires, d'une réponse au message de radiomessagerie en provenance du dispositif de communication sans fil (105) ; et
la transmission (S1010), par l'au moins un des un ou plusieurs noeuds d'accès radio supplémentaires, d'un message de résultat de radiomessagerie à destination du noeud de réseau central (405), le message de résultat de radiomessagerie incluant des informations pour aider le noeud de réseau central à déterminer auxquels un ou plusieurs noeuds d'accès radio supplémentaires faut-il diffuser des messages de radiomessagerie ultérieurs pour le dispositif de communication sans fil (105).

8. Dispositif de communication sans fil (105) configuré pour effectuer une réduction de charge de signalisation dans un réseau de communication, le dispositif de communication sans fil comprenant :
un émetteur-récepteur (215) ;
un processeur (205) couplé à l'émetteur-récepteur ;
une mémoire (210) contenant des instructions qui, lorsqu'elles sont exécutées par le processeur, amènent le dispositif de communication sans fil à effectuer :
la détermination que le dispositif de communication sans fil s'est déplacé d'une première zone de mobilité à une deuxième zone de mobilité du réseau de communication sans fil ;
le renoncement à l'exécution d'une mise à jour d'emplacement avec le réseau de communication sans fil par l'intermédiaire de l'émetteur-récepteur en réponse à la détermination que le dispositif de communication sans fil s'est déplacé de la première zone de mobilité à la deuxième zone de mobilité ;
la réception d'informations identifiant une pluralité de zones de mobilité ;
la détermination que le dispositif de communication sans fil (105) s'est déplacé dans une zone de mobilité non incluse dans la pluralité de zones de mobilité ; et
l'exécution d'une mise à jour d'emplacement avec le réseau d'accès radio (130) en réponse à la détermination que le dispositif de communication sans fil s'est déplacé dans la zone de mobilité non incluse dans la pluralité de zones de mobilité.

9. Dispositif de communication sans fil selon la revendication 8, dans lequel les instructions, lorsqu'elles sont exécutées par le processeur, amènent en outre le dispositif de communication sans fil à effectuer :
la réception, par l'intermédiaire de l'émetteur-récepteur, d'informations identifiant une pluralité de zones de mobilité ;
la détermination que le dispositif de communication sans fil (105) s'est déplacé dans une zone de mobilité non incluse dans la pluralité de zones de mobilité ; et
l'exécution d'une mise à jour d'emplacement avec le réseau d'accès radio (130) en réponse à la détection que le dispositif de communication sans fil (105) s'est déplacé dans la zone de mobilité non incluse dans la pluralité de zones de mobilité.

10. Réseau de communication (100) dans lequel une charge de signalisation est réduite, le réseau de communication (100) comprenant :
un dispositif de communication sans fil (105) ; et
un réseau d'accès radio (130) ;
dans lequel le dispositif de communication sans fil (105) est configuré pour effectuer :
la détermination que le dispositif de communication sans fil (105) s'est déplacé d'une première zone de mobilité à une deuxième zone de mobilité du réseau d'accès radio ;
le renoncement à l'exécution d'une mise à jour d'emplacement avec le réseau d'accès radio en réponse à la détermination que le dispositif de communication sans fil (105) s'est déplacé de la première zone de mobilité à la deuxième zone de mobilité ;
la réception d'informations identifiant une pluralité de zones de mobilité ;
la détermination que le dispositif de communication sans fil (105) s'est déplacé dans une zone de mobilité non incluse dans la pluralité de zones de mobilité ; et
l'exécution d'une mise à jour d'emplacement avec le réseau d'accès radio (130) en réponse à la détermination que le dispositif de communication sans fil s'est déplacé dans la zone de mobilité non incluse dans la pluralité de zones de mobilité.

11. Réseau de communication (100) selon la revendication 10, comprenant en outre :
un réseau central incluant un noeud de réseau central, dans lequel le réseau d'accès radio inclut une pluralité de noeuds d'accès radio, un ou plusieurs des noeuds d'accès radio étant configurés pour effectuer :
la réception de données de liaison descendante destinées au dispositif de communication sans fil (105) ;
la transmission d'un message de radiomessagerie au dispositif de communication sans fil (105) en réponse à la réception des données de liaison descendante ; et
la transmission d'une demande d'assistance de radiomessagerie au noeud de réseau central lorsqu'une réponse au message de radiomessagerie n'est pas reçue en provenance du dispositif de communication sans fil (105) après une période de temps prédéterminée.

12. Réseau de communication (100) selon la revendication 11, dans lequel le noeud de réseau central est configuré pour effectuer la remontée du message de radiomessagerie en réponse à la demande d'assistance de radiomessagerie par la diffusion du message de radiomessagerie à un ou plusieurs noeuds d'accès radio supplémentaires dans le réseau d'accès radio (130).

13. Réseau de communication (100) selon la revendication 12, dans lequel le noeud de réseau central est configuré pour effectuer :
le lancement d'un état de surveillance de réponse de radiomessagerie, après la remontée du message de radiomessagerie, dans lequel le noeud de réseau central attend un message de réponse de radiomessagerie en provenance du réseau d'accès radio.

14. Produit de programme informatique mémorisé sur un support de mémorisation lisible par ordinateur non transitoire (210) et incluant des instructions configurées pour amener un processeur (205) à effectuer les étapes de :
la détermination (S705), dans un dispositif de communication sans fil (105), que le dispositif de communication sans fil s'est déplacé d'une première zone de mobilité à une deuxième zone de mobilité du réseau d'accès radio ;
le renoncement (S710), dans le dispositif de communication sans fil (105), à l'exécution d'une mise à jour d'emplacement avec le réseau d'accès radio en réponse à la détermination que le dispositif de communication sans fil s'est déplacé de la première zone de mobilité à la deuxième zone de mobilité ;
la réception (S715), par le dispositif de communication sans fil (105), d'informations identifiant une pluralité de zones de mobilité ;
la détermination (S720) que le dispositif de communication sans fil (105) s'est déplacé dans une zone de mobilité non incluse dans la pluralité de zones de mobilité ; et
l'exécution (S725), par le dispositif de communication sans fil (105), d'une mise à jour d'emplacement avec le réseau d'accès radio (130) en réponse à la détermination que le dispositif de communication sans fil s'est déplacé dans la zone de mobilité non incluse dans la pluralité de zones de mobilité.
